Europäisches Patentamt

European Patent Office

Office européen des brevets

(11) Publication number:

**0 355 226**
**A1**

## (12) EUROPEAN PATENT APPLICATION

(21) Application number: 88307764.6

(22) Date of filing: 22.08.88

(51) Int. Cl.⁴: **C01G 25/00 , C04B 35/49**

(43) Date of publication of application:
28.02.90 Bulletin 90/09

(84) Designated Contracting States:
AT BE CH DE ES FR GB GR IT LI LU NL SE

(71) Applicant: **Wu, Ming Chiu**
**No. 3-1, Lane 53, Why-An Street**
**Kaohsiung(TW)**

(72) Inventor: **Chang, Yen Hwei**
**No. 9 Lane 58 E-Dong Road**
**Tainan Taiwan(TW)**

(74) Representative: **Lyons, Andrew John et al**
**ROYSTONS 531 Tower Building Water Street**
**Liverpool L3 1BA(GB)**

(54) Methods for preparing lead lanthanum zirconate titanate powders with carbonate processes.

(57) A method for preparing PLZT powder with carbonate process employes $Pb(NO_3)_2$, zirconium oxychloride and chlorides of La and Ti as starting materials of which a blended solution consisting is added to another blended solution consisting of $NH_4OH$ and $(NH_4)_2CO_3$ and refluxing at proper condition for a period of time to coprecipitate major particles covered by the carbonates of La, Ti and Pb, and minor particles covered by the hydroxides of La, Ti and Pb of PLZT powder.

FIG. 1

# METHODS FOR PREPARING LEAD LANTHANUM ZIRCONATE-TITANATE POWDERS WITH CARBONATE PROCESSES

## FIELD OF THE INVENTION

This invention relates to methods for preparing ceramic compacts possessing electrical and electrooptical properties, espacially to methods for preparing lead lanthanum zirconate-titanate (PLZT) powders with carbonate processes.

## BACKGROUND OF THE INVENTION

Conventionally, there were several methods for preparing lead lanthanum zirconate-titanate powders disclosed or reported. For example, U.S. patent No. 3,923,675 of Mazdiyasni and Brown discloses an improved method for preparing PLZT powder by hydrolytically descomposing a mixture of lead isoamyloxide, lanthanum isopropoxide, zirconium and titanium tertiary amyloxides in solution in isoamyl alcohol, and, after washing the hydroxides of Pb, La, Zr and Ti so obtained ,the washed hydroxides are dried under vacuum at $60°C$ to yield amorphous PLZT powders. Said PLZT powders are calcined at $500°C$ for 30 minutes and for 1 hour in advance to convert said PLZT powders from an amorphous state to a crystalline state, then grind it to effect communication of the larger agglomerates.

The prior method for preparing PLZT powders as described above is found several disadvantages as follow:

a). The PLZT powders prepared by said method are relatively expensive owing to the employments of organometallic compounds such as lead isoamyloxide, lanthanum isopropoxide, and zirconium and titanium tertiary amyloxides as starting materials.

b). The preparing process employing organometallic compounds as materials for preparing PLZT powders may cause the risks of environmental pollutions.

c). It is well known by those skilled in the art that the specific weight of lead oxide is heavier than that of hydroxides of La, Zr, and Ti, that makes their precipitates to segregate and results in inhomogeneity of the product.

It is an object of the present invention to provide improved methods with carbonate processes for preparing PLZT powders to overcome the disadvantages mentioned above.

It is another object of the present invention to provide methods with carbonate processes for preparing high purity, homogeneous and submicro-size PLZT powders.

It is yet another object of the present invention to provide methods with carbonate processes for cheaply preparing PLZT powders.

These and other objects and advantages of the present invention will be apparent to those skilled in the art upon consideration of the description in conjunction with the accompanying flow charts.

## BRIEF DESCRIPTION OF THE FIGURES

Fig. 1 shows a preparing flow chart embodying a method with carbonate process for preparing PLZT powder; and

Fig. 2 shows a preparing flow chart embodying an alternative method with carbonate process for preparing PLZT powder.

## SUMMARY OF THE INVENTION

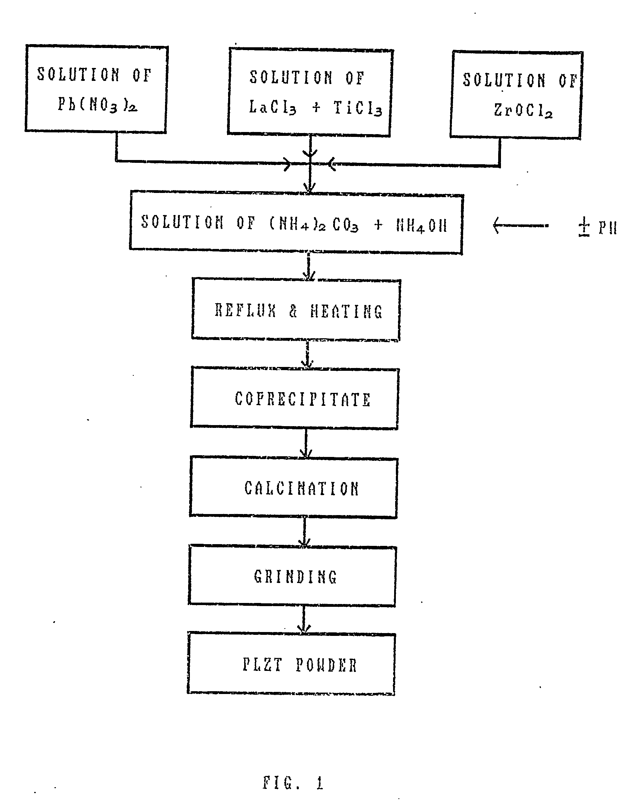

Referring to Fig. 1, a flow chart embodying the method with carbonate process for preparing PLZT powder according to the present invention, wherein, chlorides of lanthanum and titanium such as $LaCl_3$, $TiCl_3$, and $ZrOCl_2$ (zirconium oxychloride), $Pb(NO_3)_2$ are employed as starting materials. A blended solution comprising said materials is slowly added to a blended solution of $NH_4OH$ and $(NH_4)_2CO_3$. wherein, the rated value of $NH_4OH : (NH_4)_2CO_3$ is more than 1.

During the reaction, the blended solution is refluxed and maintained at a temperature ranging from $40°C$ to $100°C$, a PH value ranging from 6 to 12 for a period of about 1 hour to 6 hours. There are major reactions and minor reactions conducted along the process of the reactions.

2

The product thus prepared is an amorphous coprecipitate containing major particles of $Zr(OH)_2$ covered by the carbonates of La, Ti and Pb, and minor particles of $Zr(OH)_2$ covered by the hydroxides of La, Ti and Pb.

The coprecipitates powder is then dried and further calcined at a temperature higher than $600^\circ C$ for a period of about 1 hour to 20 hours to convert the powders to a crystalline form suitable for fabricating ceramic bodies. Thereafter, the calcined PLZT powder is ground to effect communication of larger agglomerates.

The PLZT powder can be prepared by an alternative method for obtaining finer particles of carbonate of zirconium covered by the carbonates of La, Ti and Pb. Please refer to Fig, 2, another flow chart embodying the method with carbonate process for preparing PLZT powder according to the present invention, same starting materials of $ZrOCl_2$, $LaCl_3$, $TiCl_3$ and $Pb(NO_3)_2$ are employed while the $ZrOCl_2$ priorly reacts upon sulferic acid to obtain a white precipitate of $(5ZrO_2) \bullet (3SO_3)$ The equation of said reaction is described as follow:

$$5ZrOCl_2 + 3H_2SO_4 + 2H_2O \rightarrow (5ZrO_2) \bullet (3SO_3) + 10HCl \text{ -(1)}$$

It is to be noted that the concentration of zirconium ion should be less than 0.64 mol, and the atomic rated value of Zr : S should be less than 1.2, otherwise, the resultant of the reaction of the equetion (1) is $[ZrO(SO_4)_2]^{-2}$ or complex ions of $[ZrO(OH)SO_4]^-$ instead of the solid $(5ZrO_2) \bullet (3SO_3)$ required.

The blended solution comprising said materials of $LaCl_3$, $TiCl_3$, $Pb(NO_3)_2$ togather with the slurry of said $(5ZrO_2) \bullet (3SO_3)$ are added to a blended solution of $NH_4OH$ and $(NH_4)_2CO_3$ slowly. Wherein, the rated value of $NH_4OH$ : $(NH_4)_2CO_3$ is also more than 1. The reacting conditions and the time period are suggested to be maintained the same as the first embodiment shown in Fig. 1. The slurry of said $(5ZrO_2) \bullet (3SO_3)$ has to be further reacted into a $(2ZrO_2) \bullet (CO_2)$ to stably reside in the solution. The equation of said reaction is described as follows:

$$2(5ZrO_2 \bullet 3SO_3) + 5CO_3^{-2} + H_2O + 2e^- \rightarrow 5(2ZrO_2 \bullet CO_2) + 6SO_4^{-2} + H_2 \uparrow \text{ - - - - (2)}$$

The rest reactions of $TiCl_3$, $LaCl_3$ and $Pb(NO_3)_2$ with $NH_4OH$ and $(NH_4)_2CO_3$ respectively are all the same as the first embodiment.

The product thus obtained is also an amorphors coprecipitate containing major particles of $(2ZrO_2) \bullet (CO_2)$ covered by carbonates of La, Ti and Tb, and minor particles $(2ZrO_2) \bullet (CO_2)$ covered by the hydroxides of La, Ti and Pb. Said powder is then dried and further calcined to convert the powder to a crystalline form.

It is apparent to those skilled in the art that carbonates can be effectively decomposed by heating into particles of high specific surface areas. It means that submicron-size lead lanthanum zirconate-titanate powders with particles finer and more homogeneous than the products prepared by the prior arts can be obtained.

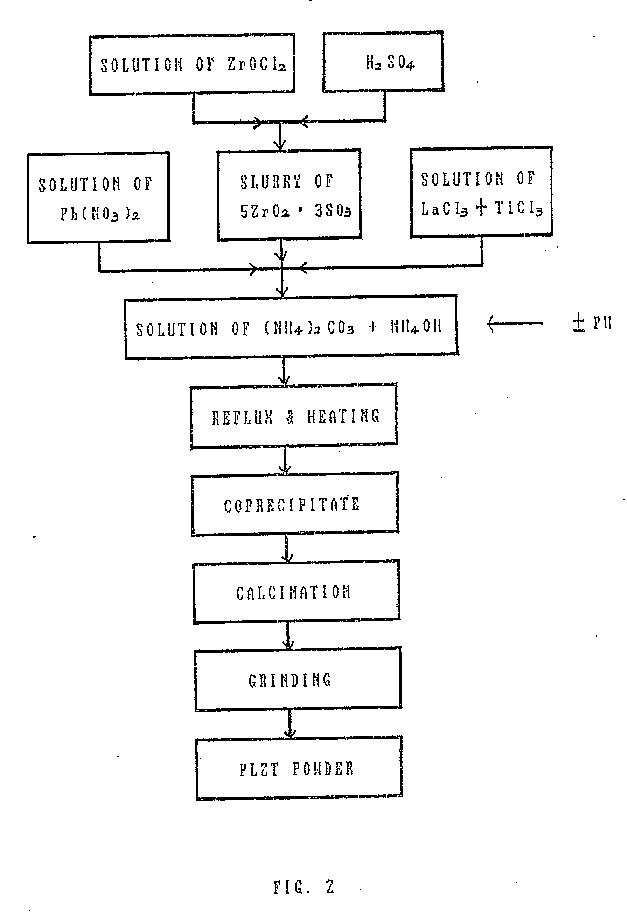

The purposes of $NH_4OH$ employed in the solution are mainly to further precipitate the residual metallic ions of La, Ti and Pb resided in the solution after the reactions described in both of the first and the second embodiments shown in Figs. 1 and 2, and to effectively reduce the loss of $(NH_4)_2CO_3$. As $NH_4OH$ can neutralize the residual acid solution and further alkalize it into an alkali solution, and thus introduce its reactions with the residual metallic ions of La, Ti and Pb into respective hydroxides to improve the gains of the products of PLZT powders. It is also known by those skilled in the art that the reacting temperature higher than $80^\circ C$ facilitates the descomposition of $(NH_4)_2CO_3$ to release gaseous carbon dioxide, said $NH_4OH$ can offer an alkali environment to reduce these disadvantageous activities.

A more complete understanding of the invention can be obtained by referring to the following illustrative examples which are not intended, however, to be unduly limitive of the invention.

EXAMPLE I

A PLZT powder suitable for fabricating electrooptic ceramics with a formula of:

$(Pb_{0.9} La_{0.1}) (Zr_{0.65} Ti_{0.35})O_3$

in which the ratio of La : Pb : Ti is 9 : 65 : 35 was selected to be prepared. Initially, a bowl containing a blended solution of same volumns (0.5 liter) of $ZrOCl_2$ (0.65 mol), $TiCl_3$ (0.35 mol), $LaCl_3$ (0.09 mol) and $Pb(NO_3)_2$ (0.91 mol), and another bowl containing 3 liters of a blended solution of $NH_4OH$ and $(NH_4)_2CO_3$ with the rated value of $NH_4OH$ : $(NH_4)_2CO_3$ being 9.1 were prepared. Thereafter, the solution contained in the former bowl was slowly added to the later bowl and refluxed to react evenly.

The reacting temperature was maintained at $80^\circ C$ and the PH value at about 11 for a period of about 2 hours. The coprecipitating composition thus obtained was calcined at 850° C for 2 hours after it was washed by clean water and dried at a temperature of 100° C. Said calcined powder was ground by proper grinder for 24 hours and dried in advance to obtain the selected PLZT powder.

EXAMPLE II

A same composition of PLZT powder was selected to be prepared in this example. Initially, a 32 normalities of sulfuric acid was added to a solution of $ZrOCl_2$(0.35 mol), wherein, the atomic ratio of S : Zr is 3 : 5. The blended solution was maintained at a temperature of 80° C for a period of 4 hours to obtain a white precipitate of $(5ZrO_2) \bullet (3SO_3)$. Another two solutions with one of which comprising same volumns (0.5 liter) of $TiCl_3$(0.188 mol), $LaCl_3$(0.096 mol) and $Pb(NO_3)_2$ (0.49 mol), and the other one comprising 3 liters of $NH_4OH$ and $(NH_4)_2CO_3$ was the rated value of $NH_4OH : (NH_4)_2CO_3$ being 4.3 were also respectively prepared. Sequentially, an amount of 0.5 liter slurry of said $(5ZrO_2) \bullet (3SO_3)$ together with the blended solution of $TiCl_3$, $LaCl_3$, and $Pb(NO_3)_2$ were added to the blended solution of $NH_4OH$ and $(NH_4)_2 \bullet CO_3$ within an hour. The solution thus mixed was refluxed and maintained at a temperature of 80° C for a period of 2 hours. The coprecipitating composition thus obtained was also calcined at 850° C for 2 hours after it was washed by clean water and dried at a temperature of 100° C. Said calcined powder was ground for 24 hours and dried in advance to obtain the selected PLZT powder.

In the table below, there is shown the results of the composition analyses for the samples of the PLZT powders prepared in the examples togather with the standard composition of the PLZT powder whose ratio of La : Zr : Ti is 9 : 65 : 35 for comparison.

| COMPOSITION (Weight %) | PbO | La₂O₃ | ZrO₂ | TiO₂ |
|---|---|---|---|---|
| STANDARD COMPOSITION OF PLZT POWDER (La:Pb:Ti = 9:65:35) | 62.82 | 4.54 | 24.19 | 8.44 |
| SAMPLE OF EXAMPLE I NH₄OH / (NH₄)₂CO₃ = 9.1 | 62.80 | 4.48 | 25.34 | 7.38 |
| SAMPLE OF EXAMPLE II NH₄OH / (NH₄)₂CO₃ = 4.3 | 61.86 | 4.81 | 25.08 | 8.25 ' |

The starting materials such as the chlorides of lanthanum, titanium and zirconium oxychloride employed in preparing the PLZT powders according to the present invention are relatively cheap compounds. For example, the chloride of titanium is available from the rich mine of $FeTiO_3$ by adding the ground powder to a solution of HCl. The equation of such a reaction is described as follow:

$TiO_2 + 4HCl \rightarrow TiCL_4 + 2H_2O$

The rest chlorides of lanthanum and zirconium can be obtained in similar ways, and the equations are described as follow:

$La_2O_3 + 6HCl \rightarrow 2LaCl_3 + 3H_2O$

$ZrO_2 + 2HCl \rightarrow ZrOCl_2 + H_2O$

In comparison with the prior arts such as the method provided by U.S. Patent No. 3,923,675 which employs the starting materials or organometallic compounds e.g. lead isoamyloxide, lanthanum isopropoxide , zirconium tertiary amyloxide and titanium tertiary amyloxides, the methods of the present invention can never have any risk of pollutions by the residual organsmetals. The common and cheap materails of the chlorides of Ti, La and Zr renders the products to a consequentially low cost. The coprecipitating powders of this invention are homogeneous owing to the closely specific weights among the carbonates of La, Zr, Ti and Pb, and the truth that the high surface activities of carbonates result in the submicro-size PLZT powder.

As will be evident to those skilled in the art, modifications of the present invention can be made in view of the foregoing disclosure without departing from the spirit and scope of the invention.

## Claims

1. A method for preparing lead lanthanum zirconate titanate (PLZT) powder with carbonate process which comprises adding a blended solution consisting essentially of $Pb(NO_3)_2$, zirconium oxychloride and chlorides of lanthanum and titanium such as $LaCl_3$, $TiCL_3$ to a blended solution consisting of $NH_4OH$ and $(NH_4)_2CO_3$ , refluxing the mixed solution at a temperature in the range of 40° C to 100° C and a PH value in the range of 6 to 12 for a period of about 1 hour to 6 hours to coprecipitate major particles of $Zr(OH)_2$ covered by the carbonates of La, Ti and Pb, and minor particles of $Zr(OH)_2$ covered by the hydroxides of La, Ti and Pb, and drying the coprecipitates by heating the same to obtain amorphous PLZT powder.

2. The method for preparing PLZT with carbonate process as claimed in Claim 1 wherein the amounts of $Pb(NO_3)_2$, zirconium oxychloride and chlorides of the La and Ti in the blended solution are such as to obtain a product having a desired stoichiometry.

3. The method for preparing PLZT powder with carbonate process as claimed in Claim 1 wherein the rated value of $NH_4OH : (NH_4)_2CO_3$ is more than 1.

4. The method for preparing PLZT powder with carbonate process as claimed in Claim 1 wherein the amorphous PLZT powder is calcined by heat the same at a temperature in the range of $600\,^{\circ}C$ to $900\,^{\circ}C$ for a period of 1 hour to 12 hours, thereby converting the PLZT powder to a crystalline form.

5. A method for preparing PLZT powder with carbonate process as claimed in Claim 1 comprises adding a solution of zirconium oxychloride to sulferic acid to obtain a precipitate of $(5ZrO_2) \bullet (3SO_3)$, adding a blended solution consisting essentially of $Pb(NO_3)_2$, chlorides of La and Ti, and the slurry of said $(5ZrO_2) \bullet (3SO_3)$ to a blended solution consisting of $NH_4OH$ and $(NH_4)_2CO_3$, refluxing the mixed solution at a temperature in the range of $40\,^{\circ}C$ to $100\,^{\circ}C$ and a PH value in the range of 6 to 12 for a period of about 1 hour to 6 hours, in which the slurry of said $(5ZrO_2) \bullet (3SO_3)$, is reacted into a $(2ZrO_2) \bullet (CO_2)$, to coprecipitate major praticles of said $(2ZrO_2) \bullet (CO_2)$ covered by the carbonates of La, Ti and Pb, and minor particles of the $(2ZrO_2) \bullet (CO_2)$ covered by the hydroxdies of the La, Ti and Pb, and drying the coprecipitates by heating same to obtain amorphous PLZT powder.

6. A method for preparing PLZT powder with carbonate process as claimed in Claim 5 wherein the concentration of zirconium ion should be less than 0.64 mol, and the atomic rated value of Zr : S should be less than 1.2 .

SOLUTION OF
Pb(NO$_3$)$_2$

SOLUTION OF
LaCl$_3$ + TiCl$_3$

SOLUTION OF
ZrOCl$_2$

SOLUTION OF (NH$_4$)$_2$CO$_3$ + NH$_4$OH  ←——  ± PH

REFLUX & HEATING

COPRECIPITATE

CALCINATION

GRINDING

PLZT POWDER

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 254 574 (NIPPON STEEL CORP.) * Column 11, claim 1, lines 22-35; claims 4-6; * | 1 | C 01 G 25/00 C 04 B 35/49 |
| A | * Column 11, claim 3 * | 4 | |
| A | US-A-4 696 810 (SHIN-ICHI SHIRASAKI) * Column 10, claim 2 * | 1,4 | |
| A | DE-A-3 612 705 (MURATA MFG) | | |
| A | CHEMICAL ABSTRACTS, vol. 84, no. 12, 22nd March 1976, page 658, résumé no. 83282b, Columbus, Ohio, US; JP-A-75 60 510 (NIPPON ELECTRIC CO. LTD) 24-05-1975 | | |

TECHNICAL FIELDS SEARCHED (Int. Cl.4)

C 01 G
C 04 B

The present search report has been drawn up for all claims

| Place of search | Date of completion of the search | Examiner |
|---|---|---|
| THE HAGUE | 26-04-1989 | LIBBERECHT-VERBEECK E.M. |